# EUROPEAN PATENT APPLICATION

(11) **EP 4 266 204 A1**
(43) Date of publication of application: **25.10.2023**
(21) Application number: 22169281.7
(22) Date of filing: 21.04.2022
(51) Int. Cl.: G06F 21/64, H04L 9/00

(54) **METHOD FOR INDIVIDUALLY SECURING A WORK AND METHOD FOR IDENTIFYING AN INDIVIDUALLY MARKED WORK**

(71) Applicant: Institute of Physics Belgrade, University of Belgrade, Belgrade 11080 (RS)
(72) Inventor: Lazovic, Sasa, 11000 Belgrad (RS); Vukmirovic, Nenad, 11050 Belgrad (RS); Stepanenko, Dimitrije, 11080 Belgrad (RS); Mitrovic Dankulov, Marija, 11080 Belgrad (RS)
(74) Representative: Weidner Stern Jeschke

(57) **Abstract**

The present invention relates to a method for individually securing a work, especially an artwork such as a painting or a sculpture, against forgery, the work comprising an individual naming, using a data management system. Furthermore, the invention relates to a method for identifying an individually marked work, especially an artwork such as a painting or a sculpture, that has been individually secured against forgery by a method as mentioned above.

## Description

The invention relates to a method for individually securing a work, especially an artwork such as a painting or a sculpture, against forgery, the work comprising an individual naming, using a data management system. Furthermore, the invention relates to a method for identifying an individually marked work, especially an artwork such as a painting or a sculpture, that has been individually secured against forgery by a method as mentioned above.

Methods for securing as well as for identifying works, especially artworks, usually comprise a personal investigation of a person skilled enough to evaluate the work and determine the author, artist and/or provenance of such artwork. This method is very inconvenient, as only few experts for certain arts are available as well as a lot of effort has to be taken into account for such a judgement for, e.g., identifying an artwork to be an original in comparison to identifying a counterfeit.

Other methods comprise a signature-like marking of an artwork by, e.g., barcodes, holograms or the like. Also, numbers in following order can be used, while such methods often are open for forgery and counterfeit, as modern printing technologies might be able to easily copy a respective marking, hologram or the like.

It is an objective of the invention to improve the state of the art.

The objective is met by a method for individually securing a work, especially an artwork such as a painting or a sculpture, against forgery, the work comprising an individual naming, using a data management system, characterized by the following steps:
- Applying an individual optical marking to the work, such that the individual marking is permanently connected to the work,
- Determining individual optical properties of the individual optical marking using an optical detector, such that determined individual optical properties are present for further processing,
- Associating the determined individual optical properties of the individual optical marking to the individual naming of the work with the data management system, such that associated individual optical properties are present,
- Storing the associated individual optical properties into a distributed ledger dataset associated with the work using the data management system, such that the associated individual optical properties are stored in the distributed ledger dataset associated with the work,
such that the work is individually secured against forgery.

By performing this method accordingly, the invention takes advantage of a combined effect of both an individual marking to be applied to the work and thereby being able to mark the work individually and permanently and by storing respective properties of this work in a distributed ledger dataset and thus also making the respective distributed ledger dataset secure against forgery and/or counterfeit by influencing a single dataset.

As utilized in accordance with the present disclosure, the following terms, unless otherwise indicated, shall be understood to have the following meanings:
"Individually securing a work" describes a procedure that both gives a respective work a marking, that is individual for that specific work, and, in addition, gives a person concerned with judging the work concerning its validity an opportunity to securely read and/or store data related to that marking. As a consequence, the combination of the specific marking on the work with the respective dataset enables an individual, inimitable identification of the work.

"Work" in this respect describes a result of, for example, craftsmanship and/or artistical work that leads to an artwork or the like, which might be a painting, a sculpture, a digital artwork or the like, while the description shall not restrict the nature, style or physical appearance of possible works here. In this respect, "forgery", which can also be described as "counterfeit", describes a procedure of recrafting a specific work, style or appearance of a work that is similar, likely or at least at first glance identical to the original work, its style or appearance and takes advantage of a value, heritage or reputation of the original work or artist by replicating such original work. The actual procedure of forgery or counterfeit both can describe recrafting such a work physicallyor using a recrafted work with the intention of declaring said recrafted, non-original, work as the original.

Such work comprises a "individual naming" which might be a clear written name, as, for example, the "Mona Lisa", or be another individual naming, such as a number or a registration within an artwork registry.

A "data management system" can, for example, be a computer or another electronic and/or digital system to manage data. In a simplest possible version, such a data management system could also comprise paperwork and written information, which, however, is very unlikely today.

"Applying an individual optical marking" to the work describes the procedure of, for example, gluing, sticking, stitching or otherwise permanently applying an individual optical marking to the work, while the individual optical marking is then permanently connected to the work, for example, such that a removal of the individual optical marking would compromise or destroy the work. It is also possible, that a representation of a physical optical marking is, e.g., laser etched onto, imprinted into or otherwise permanently applied at the work to form the individual optical marking.

An "individual optical marking" can comprise a particle and/or a surface with different optical properties, surfaces and/or structrues, such as colours, patterns, reliefs, physical and/or optical structure, 3D-topographies and the like, which are individual to a specific optical marking, such that any other optical marking differs from that optical marking in question. In particular, those individual optical markings might comprise randomly created patterns and/or naturally created patterns. As an example, such an individual optical marking might have equivalent markings to, for example, natural waterflow on beach sand, distinctive parts of animals and/or distinctive parts of plants or the like.

"Determining individual optical properties" of the individual optical marking describes the procedure of optically detecting the individual optical properties, for example by a camera, to be able to digitally store those individual optical properties. "Individual optical properties" in this respect describe, e.g., colour-schemes, patterns and/or a representation of those properties to be detected by an "optical detector", which might be a CCD camera. Those then determined individual optical properties are then present within the optical detector and/or the data management system for further processing.

"Associating the determined individual optical properties" on the individual optical marking to the individual naming of the work describes the procedure of combining both information within the data management system to so-called "associates individual optical properties" which then comprise both, the determined individual optical properties and the individual naming of the work, for example, as digital information.

"Storing the associated individual optical properties" describes the procedure of writing the respective information into a distributed ledger dataset, which is then stored distributed in a network of, for example, computers and thus made immune against counterfeit. A "distributed ledger dataset" describes a set of computer-readable data that is securely stored on different computers within a network, such that any part of said dataset comprises both, information about other parts of the dataset on other computers and the original data to be stored. This way, the distributed ledger dataset comprises the associated individual optical properties on different computers in a network that can be read with a specific history of the dataset included. Those distributed ledger datasets are widely used to securely store information, for example banking information. Such "distributed ledger datasets" are replicated, shared and synchronized digital data within a network of computers.

In an embodiment, the individual optical properties of the individual optical marking are determined from different directions, such that individual directional optical properties are determined, whereas especially one or more of the individual directional optical properties is or are correlated with the respective direction.

Thereby, individual directional optical properties, that represent a specific optical behaviour of the individual optical marking according to the specific direction it is to be seen under, can be determined, whereas especially by correlating the individual directional optical properties with the respective direction they are seen under, an additional level of safety and security can be obtained.

In particular, a representation of the different directions can be stored within the distributed ledger dataset. Thereby, the information about the respective direction, especially correlated with the individual directional optical properties of the individual optical marking can be stored for later reading, for example for identifying the individual optical marking by viewing it in the respective direction.

According to another embodiment of the invention, applying an individual optical marking to the work comprises applying biological particles, especially those biological particles with individual optical properties, to the work.

By applying those biological particles, an inimitable particle, thus an inimitable optical marking can be applied to the work, as especially biological particles with individual optical properties have a distinctive signature surface or a distinctive signature colouring, that acts as a fingerprint and thus is unique and inimitable.

In particular, applying biological particles comprises applying scales, hairs and/or bristles, especially scales, hairs and/or bristles of a Lepidoptera wing, Coleoptera species cuticle and/or Arneae species body. Those cited particles from biological species comprise unique and inimitable optical characteristics, whereby reference can be found in the applications PCT/EP2015/081398, PCT/EP2015/081400 or PCT/EP2015/081407 of the same applicant.

In yet another embodiment of the invention, the associated individual optical properties are additionally associated with an additional identifier correlated with the work.

Such an additional identifier can, in a simple embodiment, comprise a representation of a number or a representation of a plain readable name of the work. This representation is associated with the associated individual properties and thus enlarges the dataset to be stored in distributed ledger datasets.

In particular, the associated individual optical properties are additionally associated with an additional optical marking, with a barcode, with a QR code, with an RFID tag, with a number and/or with a representation of the individual naming.

An "additional optical marking" can, for example, be a holographic label or a specific holographic sticker to be additionally attached to the work. Other technologies, like barcode, QR code, RFID tag or the like, are well known to identify certain objects, yet lacking security. In combination with the security features of the invention, additional security can be obtained while remaining an easily readable identifier of the work, such as an RFID tag for example.

According to another aspect of the invention, the problem is solved by a method for identifying an individually marked work, especially an artwork such as a painting or a sculpture, that has been individually secured against forgery by a method according to one or more of the above-mentioned embodiments, using a data management system, characterized by the following steps:
- Input of the individual naming of the work into the data management system, such that the individual naming of the work is present in the data management system for further processing,
- Determining the individual optical properties of the individual optical marking using an optical detector, such that determined individual optical properties are present for further processing,
- Reading the distributed ledger dataset associated with the work with the data management system, such that the distributed ledger dataset is present in the data management system for further processing,
- Comparing the individual naming and the determined optical properties of the individual optical marking with the distributed ledger dataset in further processing, such that an authentication for the work can be presented if the individual naming and the determined optical properties of the individual optical marking match with the distributed ledger dataset,
such that the individually marked work is identified securely against forgery.

Thereby, the previously individually marked work can be identified securely against forgery.

"Input" of the individual naming of the work describes the procedure of, for example, typing in a number of the work into the data management system, or, for example, scanning a barcode of the work to present the individual naming of the work in the data management system for further processing. Any other way of introducing the individual naming of the work into the data management system is also suitable.

"Reading" the distributed ledger dataset describes the process of, for example, obtaining parts of the distributed ledger dataset from a network, for example from the internet, to have it present in the data management system for further processing. Usually, this "reading" will comprise a digital input process rather than an optical reading of, e.g., a displayed entity. Reading for this purpose might be pursued covertly with no visible output. Thereby, for example, those parts of the distributed ledger dataset are present for further use and processing that make an individual identification of the work possible.

"Comparing" the individual naming and the determined optical properties of the individual optical marking with the distributed ledger dataset and further processing describes a process of checking the individual naming and, for example, additional information, against the data stored in the distributed ledger dataset pertaining the specific works. Thereby, an "authentication", which is a statement about the validity of the work or the original status of the work, can be presented, if the individual naming and the determined optical properties of the individual optical marking match with the information stored in the distributed ledger dataset.

In an embodiment, the individual optical properties are determined along specific directions, such that individual directional optical properties are determined, whereas especially one or more of the individual directional optical properties are determined along specific directions correlated with respective individual directional optical properties.

This way, especially the previously stored directions can be used to determine specific optical properties of the individual optical marking along those specific directions, which makes the method even more specific against forgery. For example, specific directions can also be stored in the distributed ledger dataset, such that respective information can be correlated while identifying the work.

In yet another embodiment, additional information is added to the distributed ledger dataset, whereas the additional information comprises information about a pursued identification, a time of identification, a place of identification, a result of identification pertaining authentication, a purpose of identification and/or an information about an ownership of the work.

Thus, two main advantages can be achieved: firstly, the "history" of the work can be read from the distributed ledger dataset and is constantly updated during the life of the work. For example, a pursued identification while an auction is prepared, including a time of identification and the place of the planned auction, can be stored in the distributed ledger dataset. Also, a result of identification can be stored, for example, if the work is authenticated as genuine and being an original. Secondly, a possible number of counterfeits can be identified through the distributed ledger dataset, while, for example, an invalid copy of the work is identified an associated with a distributed ledger dataset pertaining to the original work. Thereby, a negative authentication can also be stored in the distributed ledger dataset to give an overview about possible counterfeits in circulation.

According to one embodiment, the additional identifier comprises additional optical information. In another embodiment, the additional identifier comprises a barcode, a QR code and/or a holographic label.

According to yet another embodiment, the additional identifier comprises additional electronic information, such as RFID-information, magnetic information and/or digital information.

In yet another embodiment of the previously described invention according to the different aspects of the invention, the distributed ledger dataset comprises public ledger, private ledger, blockchain, directed acyclic graph, tangle and/or hashgraph.

Further aspects of the present invention will be apparent from the figures and from the description of particular embodiments as
- Fig. 1: shows an artwork with a barcode and an individual optical marking,
- Fig. 2: shows cameras and a computer for identifying the artwork,

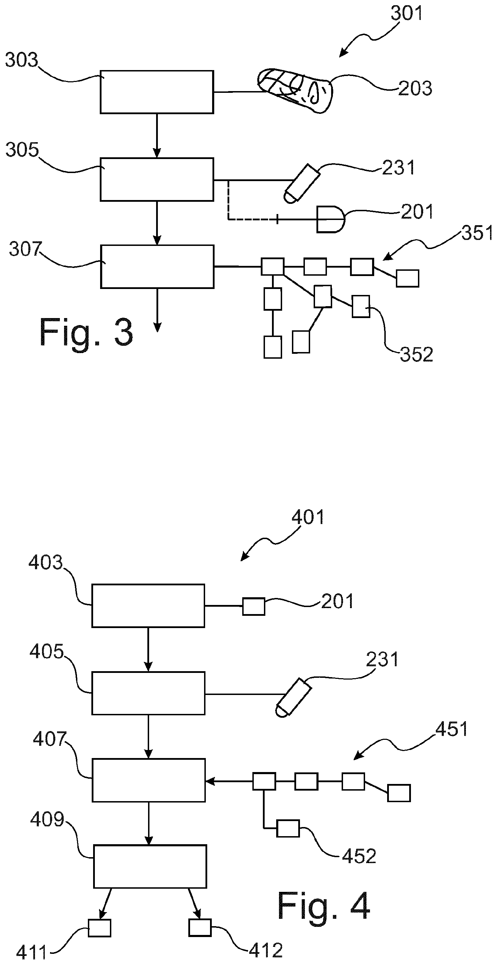

- Fig. 3: shows a method for individually securing a work, and
- Fig. 4: shows a method for identifying an individually marked work.

An artwork 101 features a frame 103. The frame 103 holds a painting 105, whereas the painting 105 is securely connected with the frame 103 for clarity of this example. This means, the frame 103 is connected with the painting 105 in a way, that separation of both would destroy the painting 105. The frame 103 itself holds a barcode 201, while the barcode 201 is a representation of a written name of the artwork 101. In addition, in close proximity to the barcode 201, the artwork 101 is marked with an optical marking 203. The optical marking 203 consists of butterfly scales, which are individual piece by piece and thus inimitable. While the optical marking is attached to the frame 103, it could also be securely attached to the painting 105, if the painting 105 is a valuable item and the frame 103 was not. If the frame 103, for example as an original frame originating in the time of the painting 105 itself, thus is valuable as well, a marking as described above is suitable when frame 103 and painting 105 are securely attached to each other.

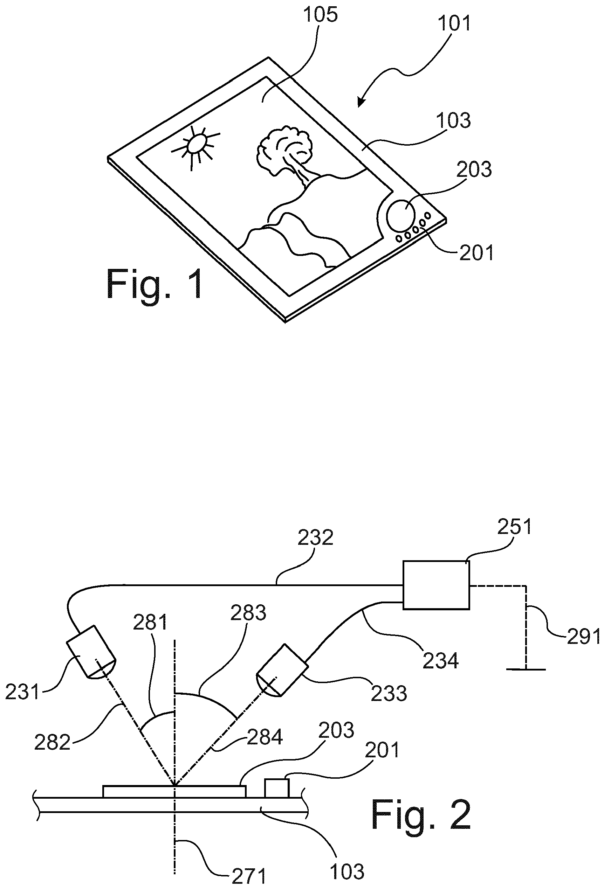

To identify and individually secure the artwork 101, a system of cameras is used:
The first camera 231 obtains the optical properties of the optical marking 203 along an axis 282, which is located in angle 281 in relation to an orthogonal 271. A second camera 233, which can also be represented by the camera 231 moved to the position of camera 233 (compare Fig. 2), obtains optical properties of the optical marking 203 along an axis 284, which is located in angle 283 in relation to the orthogonal 271. Thereby, optical characteristics of the optical marking 203, such as a colour scheme, a pattern or iridescence phenomena are depicted by the cameras 231 and 233 from different angles. An additional lighting (not shown) can be used for further effect with the optical marking 203.

The information obtained by the cameras 231 and 233 is transferred into a computer 251 via cables 232 and 234. The computer 251 can, for example, be a personal computer connected to a network 291, which might be the internet.

The information on the barcode 201 is manually input into the computer, for example by scanning the barcode 201 or typing the number underneath the barcode into the computer 251. Thereby, an individual securing of the artwork 101 can be performed.

A method 301 shows the individual securing of the artwork 101:
First, application 303 of the optical marking 203 is performed, for example by sticking the optical marking 203 to the frame 103 or, as an option, to the painting 105, with a insoluable glue.

Next, determination 305 of the optical properties of the individual optical marking 203 is performed, for example by use of cameras 231 and 233, which might be added by scanning the barcode 201. Next, storage 307 of the gathered information is performed in a way that both the name or identification of the artwork 101 and the obtained optical information from the optical marking 203 from different angles 281 and 283 are transferred into a dataset that can be stored in a distributed ledger 351, for example over the network 291 in the internet on different platforms and different computers.

A method 401 for identifying the artwork 101 is described below:
Input 403 of the information on the barcode 201 is performed, either by scanning the barcode or typing in the number below the barcode into a computer used for identification. Determination 405 of the optical information from the optical marking 203 is performed, for example by using cameras 231 and 233. The angles 281 and 283 can thereby be part of the distributed ledger 351, being stored to be used for a secure identification.

Reading 407 of a distributed ledger 451 is performed, while the distributed ledger 451 can be part of or a share of the distributed ledger 351. Single datasets 452 are a representation, copy or mirroring of specific datasets 352 of the distributed ledger 351. Thereby, each dataset 452 holds enough information to represent all the necessary information used to identify the artwork 101.

A comparison 409 is performed, while the distributed ledger 451 is compared to the input name 201 of the artwork 101 and the information gathered by determination 405 of the optical properties.

If the data matches, a positive output 412 is given, if the information does not match, a negative output 411 is given. A positive output 412, for example, represents a valid authentication for the artwork 101 as being an original. This information can then be added to the distributed ledger data, as well as a negative output 411 can be added to the distributed ledger to document an identified falsification of the artwork 101.

The above-disclosed subject matter is to be considered illustrative, and not restrictive, and the appended claims are intended to cover all such modifications, enhancements, and other embodiments, which fall within the true scope of the present disclosure. Thus, to the maximum extent allowed by law, the scope of the present disclosure is to be determined by the broadest permissible interpretation of the following claims and their equivalents, and shall not be restricted or limited by the foregoing detailed description or the drawings.

### Reference numerals

- 101: artwork
- 103: frame
- 105: painting
- 201: barcode
- 203: optical marking
- 231: camera
- 232: cable
- 233: camera
- 234: cable
- 251: computer
- 271: orthogonal
- 281: angle
- 282: axis
- 283: angle
- 284: axis
- 291: network
- 301: method
- 303: application
- 305: determination
- 307: storage
- 351: distributed ledger
- 352: dataset
- 401: method
- 403: input
- 405: determination
- 407: reading
- 409: comparison
- 411: negative output
- 412: positive output
- 451: distributed ledger
- 452: dataset

## Claims

1. Method for individually securing a work (101), especially an artwork such as a painting or a sculpture, against forgery, the work comprising an individual naming (201), using a data management system (251, 291), **characterized by** the following steps:
- Applying an individual optical marking (203) to the work (101), such that the individual optical marking (203) is permanently connected to the work (101),
- Determining individual optical properties of the individual optical marking(203) using an optical detector (231, 233), such that determinedindividual optical properties are present for further processing,
- Associating the determined individual optical properties of the individual optical marking(203) to the individual naming (201) of the work(101) with the data management system (251, 291), such that associated individual optical properties are present,
- Storing the associated individual optical properties into a distributed ledger dataset (351, 451) associated with the work using the data management system (251, 291), such that the associated individual optical properties are stored in the distributed ledger dataset (351, 451) associated with the work,
such that the work (101) is individually secured against forgery.

2. Method according to claim 1, **characterized in that** the individual optical properties of the individual optical marking(203) are determined from different directions (282, 284), such that individual directional optical properties are determined, whereas especially one or more of the individual directional optical properties is or are correlated with the respective direction (282, 284).

3. Method according to claim 2, **characterized in that** a representation (281, 283) of the different directions (282, 284) are stored within the distributed ledger dataset (351, 451).

4. Method according to any of the previous claims, **characterized in that** applying an individual optical marking (203) to the work (101) comprises applying biological particles, especially with individual optical properties, to the work.

5. Method according to claim 4, **characterized in that** applying biological particlescomprises applying scales, hairs and/or bristles, especially scales, hairs and/or bristles of a Lepidoptera wing, Coleoptera species cuticle and/or Arneae species body.

6. Method according to one or more of the previous claims, **characterized in that** the associated individual optical properties are additionally associated with an additional identifier (201) correlated with the work.

7. Method according to claim 6, characterized in thatthe associated individual optical properties are additionally associated withan additional optical marking (201), with a barcode, with a QR-code, with an RFID-tag, with a number and/or with a representation of the individual naming.

8. Method for identifying an individually markedwork (101), especially an artwork such as a painting or a sculpture, that has been individually secured against forgery by a method according to claims 1 to 7, using a data management system (251, 291), **characterized by** the following steps:
- Input of the individual naming (201) of the work(101) into the data management system (251, 291), such that the individual naming (201) of the work (101) is present in the data management system(251, 291) for further processing,
- Determining the individual optical properties of the individual optical marking (203) using an optical detector (231, 233), such that determined individual optical properties are present for further processing,
- Reading the distributed ledger dataset (351, 451) associated with the work(101) with the data management system (251, 291), such that the distributed ledger dataset (351, 451) is present in the data management system(251, 291) for further processing,
- Comparing the individual naming (201) and the determined optical properties of the individual optical marking (203) with the distributed ledger dataset in further processing, such that an authentication for the work (101) can be presented if the individual naming and the determined optical properties of the individual optical marking (203) match with the distributed ledger dataset (351, 451),
such that the individually marked work(101) is identified securely against forgery.

9. Method according to claim 8, **characterized in that** the individual optical properties are determined along specific directions (282, 284),such that individual directional optical properties are determined, whereas especially one or more of the individual directional optical properties are determined along specific directions (281, 283) correlated with the respective individual directional optical properties.

10. Method according to claim 8 or 9, **characterized in that** additional information is added to the distributed ledger dataset (351, 451), whereas the additional information comprises information about a pursued identification, a time of identification, a place of identification, a result of identification pertaining authentication, a purpose of identification and/or an information about an ownership of the work (101).

11. Method according to one of the previous claims 1 to 10, **characterized in that** the additional identifier(201) comprises additional optical information.

12. Method according to claim 11, **characterized in that** the additional identifier (201) comprises a barcode, a QR-code and/or a holographic label.

13. Method according to one of the previous claims 1 to 12,**characterized in that** the additional identifier (201) comprises additional electronic information.

14. Method according to claim 13, **characterized in that** the additional identifier (201) comprises RFID-information, magnetic information and/or digital information.

15. Method according to one of the previous claims 1 to 14, **characterized in that** the distributed ledger dataset (351, 451) comprises public ledger, private ledger, blockchain, directed acyclic graph, tangle and/or hashgraph.
